# EUROPEAN PATENT SPECIFICATION

(11) **EP 1 677 612 B1**
(45) Date of publication and mention of the grant of the patent: **05.03.2008**
(21) Application number: 04775083.1
(22) Date of filing: 08.10.2004
(51) Int. Cl.: A23B 4/08, A23L 1/325

(54) **METHOD FOR THE PREPARATION OF FROZEN FISH MASS**
VERFAHREN ZUR HERSTELLUNG EINER TIEFGEFRORENEN FISCHMASSE
PROCEDE SERVANT A PREPARER UNE MASSE DE POISSON CONGELEE

(30) Priority: 09.10.2003 NO 20034543
(43) Date of publication of application: 12.07.2006
(73) Proprietor: Neraal, Rune, 0283 Oslo (NO); Bjoerneset, Frode, 6100 Volda (NO)
(72) Inventor: Neraal, Rune, 0283 Oslo (NO); Bjoerneset, Frode, 6100 Volda (NO)
(74) Representative: Tönhardt, Marion
(86) International application number: PCT/NO2004/000303
(87) International publication number: WO 2005/032264

(56) References cited:
- PATENT ABSTRACTS OF JAPAN vol. 1998, no. 11 30 September 1998 & JP 10 146 172 A (BEEGAN TSUSHO KK) 02 June 1998
- MATSUMOTO, ET AL.: 'Cryostabilization of Protein in Surimi' SURIMI TECHNOLOGY. EDITED BY LANIER ET AL. NEW YORK: DEKKER 1992, NEW YORK, pages 357 - 388, XP002983299
- PATENT ABSTRACTS OF JAPAN vol. 012, no. 075 (C-480) 09 March 1988 & JP 62 210 944 A (CHIBA SEIFUN KK) 17 September 1987
- PATENT ABSTRACTS OF JAPAN vol. 2001, no. 19 05 June 2001 & JP 2001 045965 A (KOBESHI GYOGYO KYODO KUMIAI;FURUYA SHOKUHIN KENKYUSHO: MORI TOSHIRO) 20 February 2001
- PATENT ABSTRACTS OF JAPAN vol. 013, no. 11 (C-558) 11 January 1989 & JP 63 219 355 A (NIPPON SUISAN KAISHA LTD) 13 September 1988

## Description

The present invention concerns a method for treating ground fish meat that according to the method will be subjected to a freezing process, where one purpose of the method is to provide improved binding properties in the rethawed ground fish meat. The process is characterized in that the ground and not frozen fish meat is added a freezing stabilizer in addition to an organic acid.

### Basic problem

The processing industry for fish products uses fresh or frozen raw materials of different types of fish. Traditionally cod, haddock and coalfish have comprises the main part of the foundation for the raw material. This fish have the best consistency properties for fish food in fresh condition, i.e. the ability to form a stable forcemeat fish product after extension with milk or water, and addition of other ingredients such as starch, spices and other typical ingredients for the production of food from fish.

The problem with traditional fish species is depletion, seasonal variations and high price often makes it barely economical and uncertain productionwise to found the production on fresh raw materials. Fresh raw material has good binding properties, but it is often difficult or impossible to provide fresh raw material so that most of the raw material that is used today becomes frozen on board in the fishing vessels or ashore for transport and frozen storage. Freezing often has a negative effect on the quality of the raw material and makes it poor or unsuitable as a production raw material for food from fish where there is set requirements for binding and consistency properties. The reason for this is that the fish proteins and cellular structure seems to become destroyed by the freezing process in such a way that many of the functional properties of the proteins are lost. This problem situation has for many years been known to the fish food industry without there seeming to be possible to find a stable solution to the problem.

White salmon has for the last few years been used as an alternative raw material, especially because it seems to tolerate the freezing process somewhat better than other fish-based raw material. The problem is that the fishing season is short so that it is put great demands on the freezing capacity for storage. White salmon also has a peculiar taste and is characterized by variable quality in the end product.

Blue whiting (*Micromesistus poutassou*) has usually not been considered as a fish for consumption but has been used for production of fish meal and animal feed. There is produced some surimi from blue whiting, but the product is characterized by the absence of binding properties as is wanted in extended fish forcemeat products. The degree of exploitation has been poor, usually around or less than 10%. Frozen meat from blue whiting has not binding properties that makes it suitable for the production of meat from fish. The reason is that the freezing process destroys the binding properties of the proteins.

The purpose of the present invention is to produce frozen surimi forcemeat blocks of white fish, exemplified by the use of blue whiting, wherein the frozen raw material has better binding properties than comparable frozen raw materials, surimi or surimi forcemeat products, and that is suitable for the production of food from fish.

### Disclosure of the invention

The above mentioned purpose is obtained according to the invention with a mixture of the fish raw material prior to freezing, and is characterized in that it comprises the addition of freezing stabiliser of the raw material in combination with an activation of the binding properties of the fish proteins. Such a treatment comprises the addition of freezing stabilisers (cryoprotectants) comprising trehalose, in combination with said activation in the form of an addition of organic acids, e.g. lactic acid, or salts of organic acids, e.g. sodium, potassium or calcium lactate, or other organic acids or salts thereof. The organic acid is according to the invention a bioacceptable organic acid with a chain length of the carbon chain of between 1 - 10 atoms. The organic acid may be straight or branched, and it may be uni- or multi-valued. Examples of such acids will be formic acid, acetic acid, lactic acid, tartaric acid, succinic acid, malic acid, citric acid, pyruvic acid, lactic acid, etc.

In addition there may be added salt di-, tri- or polyphosphates. These additions may also optionally be supplied with salts, such as e.g. sodium chloride, potassium chloride, magnesium chloride or they may also comprise native or modified starches, hydrocolloids, vegetable fibres, and animal or vegetable proteins, or products with a content thereof, to improve the binding properties and consistency of the end product.

Furthermore it may be possible to manipulate the consistency of the end product by adding varying amounts of liquid, e.g. water or aqueous fluids, to the fish product prior to its freezing. When thawing such a product with an increased content of liquid, it will be obtained an end product being somewhat looser in its consistency than the original surimi product. To such en products there may be added optional additives. Since the end product has a white colour, such additives may comprise colorants. The additives may also comprise taste additives such as additions of lobster, crab, shrimp, fish, bacon, meat or other type of taste additive. It may also be possible to use a looser product as a substitute for whole fish/ fish filet, e.g. in fish fingers or the fish part in fish and chips.

Since the tenacity of the surimi product according to the invention is improved by the process, it will be possible to obtain a looser consistency of the end product by adding varying amounts of liquid. The product consistency may thus be regulated/varied through the aid of added amount of fluid prior to its freezing. Such a product may also be suitable for further production of panned fish products (e.g. fish croquettes).

Concerning the cryo stabilisers, this part will be present in an amount of 1,0% - 12,0% (w/w). Concerning salts of the organic acids the addition(s) will be in an amount of 0,1% - 6,0% (w/w).

### Publicly available and patented processes for producing surimi and fish forcement products.

According to JP 10146172 A frozen ground fish contains non-fibrous carbohydrates, an alkaline metal lactate and a polymerized phosphate to resolve problems easily inducing deterioration of quality of a frozen ground fish meat by denaturing protein in the frozen ground fish meat by a freeze storage and imparting deteriorated elasticity to a marine fish cake obtained by using the frozen ground fish meat having deteriorated quality.

PCT/UPOO/00970 of 21.02.00 discloses a process for treating fish meat and/or combined fish forcemeat comprising a high pressure treatment at low temperatures of frozen fish meat or fish meat product to improve sterility, texture and taste.

Publication NO 175243 of 07.04.89 concerns the production of minced meat, in particular fish, that is to be frozen by there being added sugar and/or a sugar alcohol with an oil or fat being dispersed on the cryoactive substance, in combination with phosphates.

Publication NO 140164 of 25.06.74 comprises a process for beaching fish meat with the maintenance of properties for fresh fish meat by adding dissolved asters of fatty acids and sugar alcohol or sucrose.

Publication NO 148907 of 04.12.79 comprises the production of ground fish meat to prevent a decrease of quality through pressing or grinding, by adding at least one compound selected from sorbitol, sucrose, sodium glutamate, sodium carbonate and sodium polyphosphate.

USP 5344665 of 06.09.94 comprises the production of frozen surimi that does not contain polyphosphates, but wherein there is added carbonates and/or bicarbonates in combination with salt of an organic acid from the group sodium citrate, calcium citrate, sodium acetate, calcium acetate, sodium tartrate, calcium tartrate and sodium gluconate.

USP 5028444 of 02.06.91 comprises a quality improvement of frozen surimi by adding a mixture of sodium bicarbonate, calcium citrate and calcium lactate, in combination with sugar and/or sugar alcohols. The sugar may be selected from the group comprising sucrose, glucose, maltose, fructose, lactose, sorbitol, mannitol, xylitol, maltitol, lactitol or combinations thereof.

USP 4176202 of 27.11.79 comprises the replacement of fish raw material in kamaboko with a mixture of vegetable protein isolate and a fat emulsion.

USP 4816278 of 28.03.89 comprises the addition to inter alia fish of soy protein, oatmeal and starch.

USP 4973483 of 27.11.90 comprises freezing of fish forcemeat by the addition of sugar and/or sugar alcohol and/or an oil or fat dispersed on the cryoprotectant, with/without phosphates, optionally added starch or modified starches, cellulose and microcrystalline cellulose.

USP 5456938 of 10.10.95 comprises the production of surimi with the addition of a hydroxypropyl starch hydrolysate and/or a spheric dextrose (glucose) as a cryoprotectant.

USP 5229151 comprises the production of surimi that is improved in quality through the addition of calcium chloride and potassium chloride, optionally together with sodium chloride.

USP 4910039 of 20.03.90 comprises the production of frozen surimi with the addition of branched dextrins and a surfactant, especially to avoid bad smell after thawing.

### Examples of the production of fish forcemeat according to the prior art.

Infra there are shown tests being conducted with surimi from blue whiting without stabilising, in comparison with frozen raw materials from other fish species that are common to use in the production of fish food products. The tests are conducted with fish that previously have been decapitated and filleted. The fish meat was pressed through a holed disc and washed prior to introducing the additives in a blender. Subsequently the fish mass was formed to a block and frozen for storage at -18°C or below. The tests were first conducted without a stabiliser to be able to evaluate the binding and treatment properties of the products. All the tests are carried out with the products fish balls and fish pudding.

First there was produced fish food with untreated, frozen raw fish material. The scheme shows the recipe and spreading degree for different fish raw material.

### FROZEN FISH FORCEMEAT WITHOUT ADDITIVES

| **Surimi of blue whiting** | | **White salmon** | | **Forcemeat of coalfish** | |
|---|---|---|---|---|---|
| Raw fish material | 65 | Raw fish material | 54,4 | Raw fish material | 62 |
| Milk | 15,6 | Milk | 24,8 | Milk | 19,2 |
| Starches | 6,4 | Starches | 6,8 | Starches | 6,5 |
| Soy oil | 5 | Soy oil | 6 | Soy oil | 6 |
| Soy protein | 3 | Soy protein | 2 | Soy protein | 2 |
| Spices | 3,5 | Spices | 4 | Spices | 3,1 |
| Salt | 1,5 | Salt | 2 | Salt | 1,2 |
| | | | | | |
| Sum total % | 100 | Sum total % | 100 | Sum total % | 100 |

The test shows that frozen blue whiting has the poorest binding properties, i.e. the poorest ability to bind added fluid, in relation to relevant alternatives such as forcemeat of white salmon and coalfish. Blue whiting is, on account of its poor tenacity properties, normally not considered as suitable for a fish raw material where there are present requirements for its extension.

### Stabilising surimi forcemeat from white fish.

By following the process according to the invention the fish raw material was treated as shown in the examples. Beforehand the fish had been decapitated end filleted. The fish meat was pressed through a holed disc and washed, before the additives were added in a blender. Then the fish material was formed into a block and frozen for storage at -18°C or below.
1) There was added 8% trehalose, 3% sodium lactate and 0,3% tripolyphosphate.
2) There was added 4% trehalose, 4% sorbitol, 2% sodium lactate, 0,3% tripolyphosphate and 2% potato starch.
3) There was added 8% trehalose, 2% sodium lactate, 0,3% polyphosphate, 0.5% sodium chloride, 0,2% guar gum and 1% vegetable fibre.

The stabilising provides a surimi forcemeat which, subsequent to freezing and thawing, has very good tenacity properties, gives a solid consistency and is neutral in smell and taste.

Surimi is often produced by adding a cryoactive substance such as sucrose or sorbitol, in combination with phosphate and starch. In the example surimi of pacific whiting and of pollack is stabilised in such a way. Blue whiting is stabilised according to the invention, example no. 1.

Surimi forcemeat stabilised according to the invention has a tough sticky consistency. It has a neutral smell and taste, and has no sweet taste as may often be present in traditional surimi.

Surimi, or minced, frozen raw fish material in a block, produced in a traditional manner with or without stabiliser, often has a short or gritty consistency. During thawing frozen fish raw material may often prove to excrete large quantities of fluid as runoff, optionally after mechanical pressure. The binding and emulsifying properties are often limited.

A bacteriological examination of the stabilised forcemeat of blue whiting displayed a total germ number of 8.000/grams after thawing. The corresponding number for traditional surimi of blue whiting was 22.000/grams. The examination proved that surimi forcemeat stabilised according to the invention, obtains a reduced bacterial load and thus a reduced risk for bacteriological influence on proteins, fat and general quality reduction. In comparison it is common to set the requirement for a total germ number in surimi at 500.000/gram.

### FREEZE-STABILISED FISH FORCEMEAT

There was produced fish forcemeat products, fishballs, fish cakes and fish pudding with traditional surimi and surimi forcemeat of blue whiting being stabilised according to the invention. The raw material was first frozen into blocks at -18°C, stored and then thawed again in connection with the production of fish food. The example shows the composition of the final fish forcemeat prior to heat treatment.

| **Stabilised surimi forcemeat of blue whiting** | | **Surimi of Pacific whiting** | | **Surimi of pollack** | |
|---|---|---|---|---|---|
| Raw fish material | 32 | Raw fish material | 44,4 | Raw fish material | 42 |
| Milk | 48,6 | Milk | 34,8 | Milk | 39,2 |
| Starches | 6,4 | Starches | 6,8 | Starches | 6,5 |
| Soy oil | 5 | Soy oil | 6 | Soy oil | 6 |
| Soy protein | 3 | Soy protein | 2 | Soy protein | 2 |
| Spices | 3,5 | Spices | 4 | Spices | 3,1 |
| Salt | 1,5 | Salt | 2 | Salt | 1,2 |
| Sum total % | 100 | Sum total % | 100 | Sum total % | 100 |

The example shows that with the one of stabilised surimi forcemeat of blue whiting there is made a product with the same or better and more solid consistency that with traditional stabilised surimi products, but with an addition of just 72-76% of the amount of raw fish material, and the degree of extension with milk that lies 26-40% higher. It was obtained similar results when the extension was done with water instead of milk. The extended fish forcemeat product proved to have a white colour and a neutral taste.

These tests show clearly that with a low input of fish raw materials and with a high degree of extension, this provides a basis for optimal functionality with a composition of the ingredients according to the invention. The stabilisation according to the invention of other fish species prior to freezing, such as e.g. Pacific whiting, Alaska pollack, white salmon, cod, etc. gives correspondingly good binding and consistency properties after thawing.

The process according to the invention shall additionally comprise the addition of di or tri polyphosphates. Furthermore the process according to the invention may comprise the addition of sodium, potassium or calcium chloride to the end product. The process according to the invention may furthermore preferably comprise the addition of one or more starches from potato, maize, tapioca, waxymaize or modified starches. Additional additives in the process according to the invention are the inclusion of one or more hydrocolloids such as guar gum, alginate, St. John's herb core flour, kojak flour and xanthan. It is also possible in the process according to the invention to add one or more vegetable fibres from wheat, oat, bamboo, cotton, leave trees or other vegetable raw materials, and it may also be possible in the process according to the invention to add one or more vegetable proteins and/or one or more animal proteins.

### Example of the production of an end product (fish fingers).

Based on the cryo-stabilised surimi product as produced supra, it was, prior to the freezing of the product, added about 50% by volume of additional liquid in the form of water to produce a porous end product. The produced surimi forcemeat is, subsequent to thawing, more porous than common surimi forcemeat (which is used for fish pudding, fish cakes, fish balls, etc.) and is well suited for products such as fish panettes, fish fingers, fish croquettes, etc.

The addition of liquid to produce a more porous end product may lie in the interval from the amount of liquid that normally provides a surimi product (see supra) and up to 200 % by volume of this normally added amount of liquid.

## Claims

1. The use of trehalose in combination with an organic salt as a cryostabilizing substance for producing a ground fish meat product being neutral in smell and taste with improved binding and consistence-forming properties wherein the fish meat is subjected to a freezing and re-thawing process.

2. The use according to claim 1, wherein the fish meat originates from white fish meat e.g. cod, haddock, coalfish, white salmon or blue whiting (Micromesistus poutassou).

3. The use according to claim 1 or 2, wherein to the fish meat product is added one or more hydrocolloids such as guar gum, alginate, St. John's bread core flour, kojak flour and xanthane.

4. The use according to any of the claims 1 to 3, wherein to the fish meat product is added one or more vegetable fibres from wheat, oat, bamboo, cotton, leave trees or other vegetable raw materials.

5. The use according to any of the claims 1 to 4, wherein to the fish meat product is added one or more vegetable proteins.

6. The use according to any of the claims 1 to 5, wherein to the fish meat product is added one or more animal proteins.

7. The use according to any of the preceding claims, wherein the trehalose is present in an amount of 1.0 to 12.0 % w/w with respect to the weight of the end product.

8. The use according to any of the preceding claims, wherein the organic salt is present in an amount of 0.1 to 6.0 % w/w with respect to the weight of the end product.

## Patentansprüche

1. Verwendung von Trehalose in Verbindung mit einem organischen Salz als kryostabilisierendes Mittel zur Herstellung von geruchs- und geschmacksneutralen Produkten aus gemahlenem Fischfleisch mit verbesserten Bindungs- und Formfestigkeitseigenschaften, wobei das Fischfleisch einem Gefrier- und Wiederauftauprozeß ausgesetzt wird.

2. Verwendung nach Anspruch 1, bei der das Fischfleisch von weißem Fischfleisch stammt, wie zum Beispiel Dorsch, Schellfisch, Köhler, weißem Lachs oder Blauem Wittling (Micromesistus poutassou).

3. Verwendung nach Anspruch 1 oder 2, wobei dem Fischfleischprodukt ein oder mehrere Hydrokolloide, wie zum Beispiel Guaran, Alginat, St. John's Bread Kernmehl, Kojakmehl und Xanthan zugegeben werden.

4. Verwendung nach einem der Ansprüche 1 bis 3, wobei dem Fischfleischprodukt eine oder mehrere pflanzliche Fasern von Weizen, Hafer, Bambus, Baumwolle, Laubbäumen oder anderen pflanzlichen Rohstoffen zugegeben werden.

5. Verwendung nach einem der Ansprüche 1 bis 4, wobei dem Fischfleischprodukt ein oder mehrere pflanzliche Proteine zugegeben werden.

6. Verwendung nach einem der Ansprüche 1 bis 5, wobei dem Fischfleischprodukt ein oder mehrere tierische Proteine zugegeben werden.

7. Verwendung nach einem der vorangegangenen Ansprüche, wobei die Trehalose mit einem Anteil von 1,0 bis 12,0 Gew.-% bezüglich des Gewichts des Endprodukts vorliegt.

8. Verwendung nach einem der vorangegangenen Ansprüche, wobei das organische Salz mit einem Anteil 0,1 bis 6,0 Gew.-% bezüglich des Gewichts des Endprodukts vorliegt.

## Revendications

1. Utilisation de tréhalose en combinaison avec un sel organique comme substance de cryostabilisation pour produire un produit de chair de poisson benthique neutre en termes d'odeur et de goût avec des propriétés améliorées de liaison et de consistance où la chair de poisson est soumise à un procédé de congélation et de redécongélation.

2. Utilisation selon la revendication 1, dans laquelle la chair de poisson provient de chair de poisson blanche, par exemple morue, églefin, goberge, saumon blanc ou merlan bleu austral (Micromesistus poutassou).

3. Utilisation selon la revendication 1 ou 2, dans laquelle sont ajoutés au produit de chair de poisson un ou plusieurs hydrocolloïdes tels que la gomme de guar, l'alginate, la farine de caroube, la farine de kojak et le xanthane.

4. Utilisation selon l'une quelconque des revendications 1 à 3, dans laquelle sont ajoutées au produit de chair de poisson une ou plusieurs fibres végétales provenant du blé, de l'avoine, du bambou, du coton, d'arbres à feuilles ou d'autres matières premières végétales.

5. Utilisation selon l'une quelconque des revendications 1 à 4, dans laquelle sont ajoutées au produit de chair de poisson une ou plusieurs protéines végétales.

6. Utilisation selon l'une quelconque des revendications 1 à 5, dans laquelle sont ajoutées au produit de chair de poisson une ou plusieurs protéines animales.

7. Utilisation selon l'une quelconque des revendications précédentes, dans laquelle le tréhalose est présent en une quantité de 1,0 à 12,0% en p/p par rapport au poids du produit fini.

8. Utilisation selon l'une quelconque des revendications précédentes, dans laquelle le sel organique est présent en une quantité de 0,1 à 6,0 % en p/p par rapport au poids du produit fini.
